# EUROPEAN PATENT APPLICATION

(11) **EP 4 418 501 A1**
(43) Date of publication of application: **21.08.2024**
(21) Application number: 24156627.2
(22) Date of filing: 08.02.2024
(51) Int. Cl.: H02K 3/28, H02K 5/20, H02K 11/25, H02K 21/24

(54) **A STATOR**

(30) Priority: 08.02.2023 GB 202301792
(71) Applicant: Evolito Ltd, Bicester, Oxford Oxfordshire OX25 2PA (GB)
(72) Inventor: PATEL, Mukesh, Oxford, OX25 2PA (GB); PORTER, Joel, Oxford, OX25 2PA (GB); MORRIS, Gareth Edward, Oxford, OX25 2PA (GB); ANTHONY, John Edward, Oxford, OX25 2PA (GB)
(74) Representative: Marks & Clerk LLP

(57) **Abstract**

A stator that has a plurality of stator bars disposed circumferentially at intervals around an axis and a housing for enclosing the plurality of stator bars. Each of the stator bars has a set of windings wound therearound to form a stator coil stack for generating a magnetic field generally parallel to the axis. The plurality of stator bars may be arranged into at least a first group of stator bars and a second group of stator bars, where the first and second groups of stator bars being isolated from one another. This isolation may, for example, take the form of electrical isolation where each of the different first and second groups of stator bars are coupled to a different controller. Alternatively, or as well as the electrical isolation, the housing may be provided with isolated chambers filled with a flowing cooling fluid, where each of the first and second groups of stator bars are located in respective first and second chambers flooded with cooling fluid. The first and second chambers are isolated from each other.

## Description

### FIELD OF THE INVENTION

The present invention relates to a stator for an axial flux machine, and axial flux machines.

### BACKGROUND OF THE INVENTION

The move away from internal combustion engines to more electric machines, though initially focussed on automotive applications for land-based vehicles, is now finding a new focus in the demanding applications of aerospace. Because air-lifting of mass is costly, research effort is turning to maximise efficiencies, torque, speed and reducing mass of electric machines for aerospace applications where highest power density coupled with reliability are consistent drivers for this industry.

For many years radial flux motors / generators dominated aerospace electric machines, despite the invention of a different, axial flux topology. Several reasons can be attributed to the slow rise of axial flux machines, still in their infancy in aerospace, not least difficulty in displacing incumbent, known reliability technologies, but also not helped by challenges in efficient and consistent techniques for production. Axial flux electric machines present considerable challenges in manufacture and yet arguably, provide the best power dense topology for many aerospace drive, lift and generator applications, operating at speeds and torques that suit turbine, prop, and blade, drive sources. Advances continue to be made in axial flux topology, particularly improving power density and manufacturing techniques.

GB 2468018 describes an axial flux machine comprising a series of coils wound around pole pieces spaced circumferentially around the stator and spaced axially (i.e., parallel the rotational axis of the rotor) from the associated rotor. The rotor has two stages comprising discs provided with permanent magnets that face either end of each electromagnetic coil of the stator.

Reliability is important in many commercial and industrial fields, but is well known to be of paramount importance in aerospace applications, where loss of capability of key functions can be catastrophic. Because need for reliability is so high, critical components in an aircraft will often have built in redundancy, or the component is duplicated and sometimes triplicated to allow for the instance of a component failing, in which case a duplicate is brought into play. For example, in the operation of air control surfaces, redundant secondary electrical machines are often employed in case of active system failure. Main drive engines are frequently duplicated, with the craft able to `fly' should one unit fail.

A conflicting requirement for aerospace is light-weighting, and for every redundant system installed as insurance against a working component failure, the redundant system(s) is 'carried' as excess weight on every take-off, flight, and landing, adding significant cost.

An alternative to providing duplicate redundant systems, is to build in fail-safe options. In this instance an electric machine may lose part of a critical component e.g., a stator and the remaining un-affected part continues to operate providing sufficient power to 'limp-home' safely.

CN201742274U teaches a radial electric machine wherein concentric radial stators have a radial rotor sandwiched between stator layers, each stator is able to operate independently allowing for failure in one stator whilst the other takes a 'limp-home' role. Such a system has more or less capability depending on which stator fails. A similar approach is found in US2019312490A1 in which concentric stators are also taught alongside a third axial stator and rotor, with the redundancy provided by the radial stator pair.

For high power density machines, liquid cooling is generally necessary and there is complexity of cooling for radial machines because end turns are vulnerable to overheating and are challenging to cool effectively whilst retaining fail-safe options. Each radial stator should ideally be separately cooled, but such separate cooling is challenging.

Axial flux machines, because of their generally short axial length, are often stacked in parallel providing increased power output, and are also enabled for each axial machine unit to be disengaged in case of fault, or if power requirement does not necessitate the functioning of all units.

A disadvantage of this stacked axial machine approach is increase in axial length, and machine overall weight alongside increased weight and volume of airframe mounting structures.

We have appreciated the need for an arrangement that provides redundancy in an axial flux machine, in particular within the stator.

### SUMMARY OF THE INVENTION

The present invention relates to a stator for an axial flux machine, and an axial flux machine comprising the stator as defined by the independent claims, which are appended hereto. Further advantageous embodiments are defined by the dependent claims, also appended hereto.

We describe a stator for an axial flux machine, comprising: a plurality of stator bars disposed circumferentially at intervals around an axis, each of the stator bars having a set of windings wound therearound to form a stator coil stack for generating a magnetic field generally parallel to the axis, the plurality of stator coil stacks being arranged to provide a hollow region at the centre of the axis; and a housing for enclosing the plurality of stator bars, wherein the plurality of stator bars are arranged into at least a first group of stator bars and a second group of stator bars, the first and second groups of stator bars being isolated from one another.

Grouping the stator bars into separate, isolated groups, enables redundancy to be provided within the function of the stator. Two forms of isolation are considered, electrical isolation, and cooling isolation. Each of which may be provided independent of each other, or the techniques may be employed in combination.

With regards to the electrical isolation, the stator may be provided with at least a first and a second group of stator bars that are electrically isolated from one another. The first electrically isolated group of stator bars may be coupled to a first input for receiving a first multi-phase input voltage, and the second electrically isolated group of stator bars may be coupled to a second input for receiving a second multi-phase input voltage, the first and second inputs being coupleable to respective first and second controllers for providing the respective first and second multi-phase input voltages. The first and second controllers may be different controllers.

Electrically isolating the groups of stator bars allows the stator to continue to drive the rotor in the event that one of the controller fails. This is potentially a safety critical failure when the axial flux machine using such a stator is, for example, being used to power the flight of an aircraft. Whilst only a subset of the stator bars would be driving the rotor of such a machine, they could still be driven safely by the functioning controller until the vehicle could be brought to a safe stop.

In one implementation, the first group of stator bars may comprise a first plurality of stator bars located in a first circumferential half of the stator, and the second group of stator bars may comprise a second plurality of stator bars located in a second circumferential half of the stator.

In another implementation, the first group of stator bars may comprises a first set of stator bars, and the second group of stator bars may comprise a first set of stator bars, wherein the first set of stator bars of the first group may comprise at least one respective stator bar for each of the first multi-phase input voltages, and wherein the first set of stator bars of the second group may comprise at least one respective stator bar for each of the second multi-phase input voltages.

In a further implementation, the first group of stator bars may comprise a second set of stator bars, and the second group may comprise a second set of stator bars. The second set of stator bars of the first group may comprise at least one respective stator bar for each of the first multi-phase input voltages, and the second set of stator bars of the second group may comprise at least one respective stator bar for each of the second multi-phase input voltages.

In the implementations discussed above, the first group of stator bars and second group of stator bars may alternately be arranged circumferentially around the stator.

Alternatively, the first set of stator bars of the first group and the first set of stator bars of the second group may be interleaved with each other circumferentially around the stator.

In the interleaved alternative arrangement, the interleaved arrangement may comprise a first stator bar of the first set of stator bars of the first group being adjacent a first stator bar of the first set of stator bars of the second group, a second stator bar of the first set of stator bars of the first group being between the first stator bar of the first set of stator bars of the second group and a second stator bar of the first set of stator bars of the second group, a third stator bar of the first set of stator bars of the first group being between the second stator bar of the first set of stator bars of the second group and a third stator bar of the first set of stator bars of the second group.

The respective first, second and third stator bars may correspond with respective first, second and third phase input voltages from the respective first or second multi-phase input voltages.

With the electrical isolation, the stator may comprise a third group of stator bars that is electrically isolated from the first and second groups of stator bars. The third group of stator bars may be coupled to a third input for receiving a third multi-phase input voltage. The third input may be coupleable to a third controller for providing the respective third multi-phase input voltages. The third controller may be different to the first and second controllers.

In an arrangement with three inputs coupleable to three controllers, the first group of stator bars may comprise a first set of stator bars, the second group of stator bars may comprise a first set of stator bars, and the third group of stator bars may comprise a first set of stator bars. The first set of stator bars of the first group may comprises at least one respective stator bar for each of the first multi-phase input voltages. The first set of stator bars of the second group may comprise at least one respective stator bar for each of the second multi-phase input voltages. The first set of stator bars of the third group may comprises at least one respective stator bar for each of the third multi-phase input voltages.

The first group of stator bars, second group of stator bars and third group of stator bars may be alternately arranged circumferentially around the stator.

In any of the above electrical isolation implementations, the housing of the stator may also comprise two or more dividers arranged in the housing to form two or more chambers within the housing, the dividers forming a fluid-tight seal between the two or more chambers. The at least two groups of stator bars may be at least two physically isolated groups isolated from each other by the dividers. The first group of stator bars may be located in the first chamber of the housing and the second group of stator bars may be located in the second chamber of the housing.

Such an implementation isolates the cooling arrangement of the stator such that, should one of the cooling circuits of the stator fail, the stator may continue to cool a portion of the stator to enable it to function to drive a rotor.

Alternatively to the cooling implementation using dividers to separate the respective cooling chambers, the housing may instead be formed of two or more separate housing portions, each housing portion forming a respective chamber and enclosing a respective group of stator bars, the two or more housing portions being isolated from each other. In this implementation, the first group of stator bars may be located in the first housing portion and the second group of stator bars may be located in the second housing portion.

In either of the cooling implementations, each of the two or more chambers may be flooded with a cooling fluid. Each of the two or more chambers may comprise an inlet port for supplying the cooling fluid, and an outlet port for drainage of the cooling fluid. The cooling fluid may flow between the inlet and outlet ports.

Whilst we have discussed the cooling implementation in combination with the electrical isolation implementation, we also discuss an arrangement in which the cooling isolation is used without the electrical isolation. In such an arrangement, the stator may housing may comprise two or more dividers arranged in the housing to form two or more chambers within the housing, the dividers forming a fluid-tight seal between the two or more chambers. The first and second groups of stator bars may be physically isolated groups of stator bars isolated from each other by the dividers; and the first group of stator bars may be located in the first chamber of the housing and the second group of stator bars may be located in the second chamber of the housing.

Alternatively to the cooling implementation using dividers to separate the respective cooling chambers, the housing may instead be formed of two or more separate housing portions, each housing portion forming a respective chamber and enclosing a respective group of stator bars, the two or more housing portions being isolated from each other. In this implementation, the first group of stator bars may be located in the first housing portion and the second group of stator bars may be located in the second housing portion.

In either of the cooling implementations, each of the two or more chambers may be flooded with a cooling fluid. Each of the two or more chambers may comprise an inlet port for supplying the cooling fluid, and an outlet port for drainage of the cooling fluid. The cooling fluid may flow between the inlet and outlet ports.

In any of the cooling implementations (with or without the electrical isolation) the housing and stator coil stacks may be arranged to permit the cooling fluid to flow back and forth between the inner and outer radius of the stator coil stacks. The stator may also comprise one or more blocks disposed in the stator housing between the stator housing and one or more respective stator coil stacks, wherein the cooling fluid is forced through gaps between the stator coil stacks by means of the blocks.

We also describe an axial flux machine, comprising: a stator as described above; and a rotor comprising a set of permanent magnets and mounted for rotation about the axis of the machine, the rotor being spaced apart from the stator along the axis of the machine to define a gap between the stator and rotor.

The axial flux machine may comprise a second rotor comprising a set of permanent magnets and mounted for rotation about the axis of the machine, the second rotor being spaced apart from the stator along the axis of the machine to define a gap between the stator and second rotor, and the second rotor being disposed on a side of the stator opposed to the rotor.

In any of the above, the axial flux machine may be a motor or a generator.

### LIST OF FIGURES

The present invention will now be described figures by way of example only, and with reference to the accompanying figures, in which:
Figure 1 shows a schematic illustration of a yokeless and segmented armature machine;
Figure 2 shows a schematic illustration of a yokeless and segmented armature machine;
Figure 3 shows a schematic illustration of a yokeless and segmented armature machine;
Figure 4 shows a schematic representation an axial flux stator;
Figure 5 shows an example arrangement of the stator bars in an axial flux machine; and
Figure 6 shows a plan view of an axial flux stator that utilises the cooling isolation arrangement.

### DETAILED DESCRIPTION OF THE PREFERRED EMBODIMENTS

In brief, the present invention relates to a stator that has a plurality of stator bars disposed circumferentially at intervals around an axis and a housing for enclosing the plurality of stator bars. Each of the stator bars has a set of windings wound therearound to form a stator coil stack for generating a magnetic field generally parallel to the axis. The plurality of stator bars may be arranged into at least a first group of stator bars and a second group of stator bars, where the first and second groups of stator bars being isolated from one another. This isolation may, for example, take the form of electrical isolation where each of the different first and second groups of stator bars are coupled to a different controller. Alternatively, or as well as the electrical isolation, the housing may be provided with isolated chambers filled with a flowing cooling fluid, where each of the first and second groups of stator bars are located in respective first and second chambers flooded with cooling fluid. The first and second chambers are isolated from each other. Such an arrangement provides redundancy.

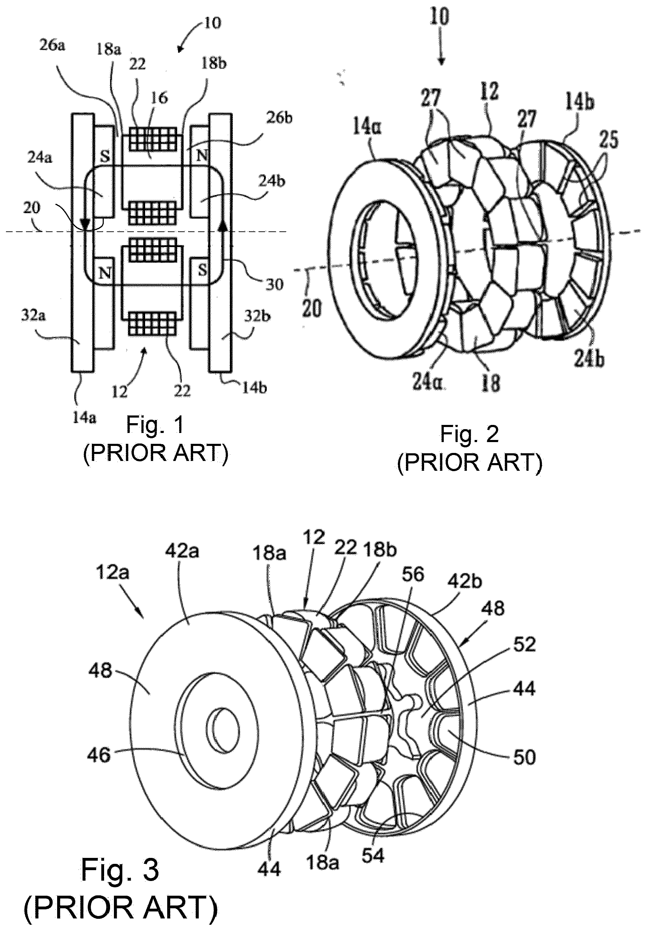

Referring first to Figures 1, 2 and 3, which are taken from WO2012/022974, show a schematic illustration of a yokeless and segmented armature machine 10.

The machine 10 comprises a stator 12 and two rotors 14a,b. The stator 12 is a collection of separate stator bars 16 spaced circumferentially about a rotation axis 20 of the rotors 14a,b. Each bar 16 has its own axis (not shown) which is preferably, but not essentially, disposed parallel to the rotation axis 20. Each end of each stator bar is provided with a shoe 18a,b which serves a physical purpose of confining a coil stack 22, which stack 22 is preferably of square/rectangular section insulated wire so that a high fill factor can be achieved. The coils 22 are connected to an electrical circuit (not shown) that, in the case of a motor, energizes the coils so that the poles of the resultant magnetic fields generated by the current flowing in the coils is opposite in adjacent stator coils 22.

The two rotors 14a,b carry permanent magnets 24a, b that face one another with the stator coil 22 between (when the stator bars are inclined - not as shown - the magnets are likewise). Two air gaps 26a,b are disposed between respective shoe and magnet pairs 18a/24a, 18b/24b. There are an even number of coils and magnets spaced around the axis of rotation 20 and, preferably, there are a different number of coils and magnets so that the coils do not all come into registration with the corresponding magnet pair at the same time and at the same rotational position of the rotor with respect to the stator. This serves to reduce cogging.

In a motor the coils 22 are energized so that their polarity alternates serving to cause coils at different times to align with different magnet pairs, resulting in torque being applied between the rotor and the stator. The rotors 14a,b are generally connected together (for example by a shaft, not shown) and rotate together about the axis 20 relative to the stator 12. The magnetic circuit 30 is provided by two adjacent stator bars 16 and two magnet pairs 24a,b and a back iron 32a,b for each rotor links the flux between the back of each magnet 24a,b facing away from the respective coils 22. The stator coils 16 are enclosed within a housing that extends through the air gap 26a, b and which defines a chamber supplied with a cooling medium.

Turning to Figure 3, a stator 12a is shown in which the stator coils are located between plastic material clamshells 42a, b. These clamshells have external cylindrical walls 44, internal cylindrical walls 46, and annular radially disposed walls 48. In the prior art example of Figure 3 the radial walls 48 include internal pockets 50 to receive the shoes 18a,b of the stator bars 16 and serve to locate the stator coil assemblies 16, 22, 18a,b when the two clam shell housings 42a, b of the stator 12a are assembled together. The stator housing 42a, b defines spaces 52 internally of the coils 22 and externally at 54 around the outside of the coils 22 and there are spaces 56 between the coils. The spaces 52,54,56 are interlinked defining a cooling chamber. Although not shown in Figure 3, when assembled, the stator housing 42a,b is provided with ports that allow cooling medium such as oil to be pumped into the spaces 52, 54, 56 to circulate around the coils and cool them.

The coil cores may be laminated with the inter-lamination insulation parallel to the desired flux direction. However, the coil cores may also be formed from soft-iron particles coated with electrical insulation and moulded to a desired shape (soft magnetic composites - SMC), being bound together by the insulation matrix. Conveniently the shoes and stator bar may be formed separately and subsequently assembled.

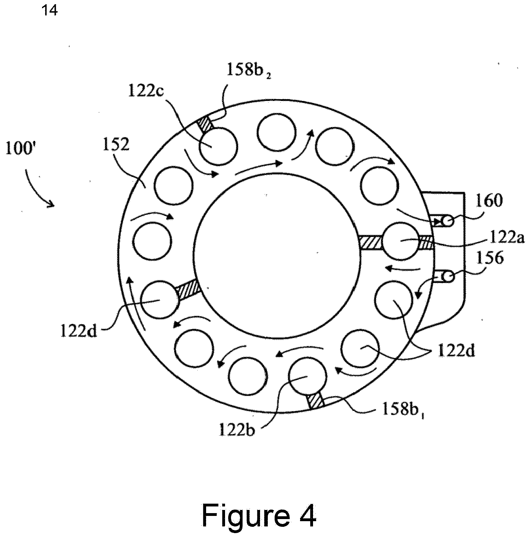

Turning to Figure 4, a schematic representation is shown of a prior art axial flux stator from WO2012/022974 in which coolant inlet 156 provides a source of coolant which is guided in a meandering path back and forth between stator cores, by blockers 158b on outer and inner walls of the stator towards outlet 160.

Preferably there are an even number of stator cores 122 a,b,c,d, and coils (not shown) and magnets on opposing rotors (not shown) and, preferably, there are a different number of coils and magnets so that the coils do not all come into registration with the corresponding magnet pair at the same time and at the same rotational position of the rotor with respect to the stator.

For force balance reasons, electrical machine engineers seek to distribute stator impulse forces, e.g., for a 3-phase axial flux electric machine, adjacent armatures are powered in sequence with U, V, W phases, leading to a 12-core stator providing 4 x 3-phase symmetric quadrants with magnetic forces rotating in synchronisation with opposing rotor magnet poles.

When considering redundancy in axial flux machine design, in particular in the arrangement of the stator, fundamentally the concept relies on the stator bars being grouped into separate, isolated groups. There are two main aspects that we will discuss. Firstly, we will discuss electrical redundancy, which may be provided in the form of additional, separate controllers/inverters that power the stator of the axial flux machine. Secondly, we will discuss the redundancy of the cooling system, in which isolated, separate cooling chambers are provided. We will discuss each concept in turn.

### Electrical Isolation

In its broadest implementation, the electrical isolation technique utilises two or more independent controllers (otherwise known as inverters where the main power input to the system is DC and the axial flux machine is controlled using a multi-phase AC output voltage) that drive the stator bars of the stator in order to generate the rotating magnetic field that causes a rotor magnetically coupled with the stator bars to rotate about an axis. Since we are discussing axial flux machines, the magnetic flux is generally parallel to the axis of rotation of the rotor.

By using separate controller to drive different isolated groups of stator bars within the stator, redundancy is possible as if one controller fails, the remaining controller(s) may continue to drive the respective group of stator bars and thus the rotor may continue to drive the output shaft to provide torque. Whilst not able to provide the output power as before, this arrangement can at least implement a machine that can provide a limp-home mode, or sufficient output torque to complete the machine's task until it can be stopped safely.

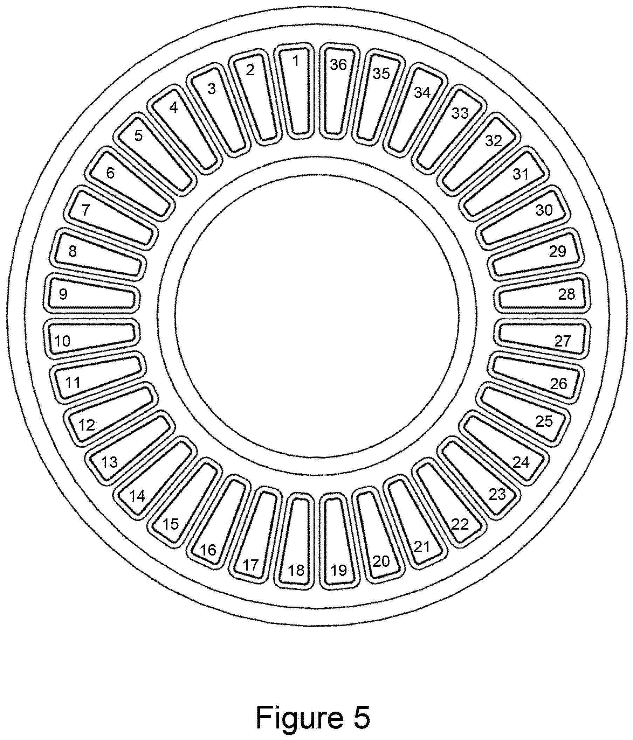

In the arrangement shown in figure 5, 36 stator bars (labelled 1 to 36) are shown. However, this implementation is not limited to such a stator. Fewer stator bars may be present, or more stator bars may be present, depending on the structure of an axial flux machine that could utilise such a stator. As described above, each stator bar has a single phase multi-turn coil wound round to provide a stator coil stack that is electrically connected to a controller (not shown) via respective inputs.

In one implementation, the stator bars are divided into two groups with a first half of the stator bars being allocated to a first group of stator bars, and the remaining half of the stator bars being allocated into a second group of stator bars. For example with reference to Figure 5, stator bars 1 to 18 may be allocated into a first group of stator bars, and stator bars 19 to 36 may be allocated into a second group of stator bars.

| Stator Bar | Electrical Group |
|---|---|
| 1-18 | 1 |
| 19-36 | 2 |

Each of the first group of stator bars are electrically connected to a first controller via a first input (not shown for simplicity), which is configured to provide a first multi-phase output voltage to drive the first group of stator bars. Each of the second group of stator bars may be electrically connected to a second controller via a second input (not shown for simplicity), which is configured to provide a second multi-phase output voltage to drive the second group of stator bars.

Whilst we discuss multi-phase output voltages, in practice this may be a three-phase output voltage, although other number of phases in a multi-phase output voltage are possible.

Since each of the first and second controllers are different, the electrical output voltage of the first group of stator bars and second group of stator bars are electrically isolated from each other. As such, should one controller fail, the remaining controller may continue to drive the remaining group of stator bars in order to continue to drive the rotor magnetically coupled to the stator. Whilst the rotor may be mechanically unbalanced in this condition due to the unbalanced magnetic forces acting on the rotor (i.e. only half of the circumference of the stator is being driven), the axial flux machine may be designed to cope with this imbalance for redundancy.

In practice, when using more than one controller, the two (or more) controllers are synchronised such that they may drive the stator bars in sequence in order to provide the desired rotor output. The controllers may receive rotor angle position feedback of the rotor (via separate position sensors, for example), which may determine the current waveform that they use to drive the respective stator bars. The multi-phase output voltage sides remain isolated from each other.

Other implementations of this arrangement are possible. We will discuss alternative implementations below.

In a second implementation, assuming as an example that the controllers provide a three-phase output voltage, the stator bars may be electrically arranged in sequence. For example, a repeating pattern of UVW phase arrangements may be allocated for the stator bars. As such, stator bar 36 may be allocated the U phase, stator bar 35 may be allocated the V phase, and stator bar 34 may be allocated the W phase, with the UVW pattern repeating all of the way around the stator until stator bar 1 is arrived at. As such, the repeated pattern would be UVW UVW UVW UVW etc all of the way around the stator. Each UVW block may be considered a "set" of stator bars within a particular group of stator bars.

Within this second implementation, the fundamental arrangement may be for each set of UVW stator bars to be alternately allocated to the first or second group of stator bars. That is, a first set of UVW stator bars are connected to the first input coupled to the first controller, and the next set of UVW stator bars are connected to the second input coupled to the second controller, and this pattern is repeated between group 1 and group 2 around the stator.

Using the arrangement of Figure 5 (for at least the first third of the stator bars clockwise starting from stator bar 36), the stator bars may be arranged as follows:

| Stator Bar | Phase | Electrical Group |
|---|---|---|
| 36 | U | 1 |
| 35 | V | 1 |
| 34 | W | 1 |
| 33 | U | 2 |
| 32 | V | 2 |
| 31 | W | 2 |
| 30 | U | 1 |
| 29 | V | 1 |
| 28 | W | 1 |
| 27 | U | 2 |
| 26 | V | 2 |
| 25 | W | 2 |

This pattern is repeated all of the way around the stator.

Since each of the first and second controllers are different, the first group of stator bars and second group of stator bars are electrically isolated from each other. As such, should one controller fail, the remaining controller may continue to provide power to the remaining group of stator bars in order to continue to drive the rotor magnetically coupled to the stator.

This arrangement may offer an improved NHV (Noise, Vibration and Harshness) performance over the first implementation (where the first half of stator bars allocated to the first group and second half of the stator bars is allocated to the second group), since the magnetic imbalance of the rotor and stator pairing is minimised when driven by only one of the two controllers.

A third implementation of this technique is considered that is similar to the second implementation. In the third implementation, instead of each set of three stator bars alternating between the first and second groups, each group comprises more neighbouring stator bars, that is each group comprises a second set of stator bars. Using the labelling as above, the arrangement may be, for example, as follows (for the first third of the stator):

| Stator Bar | Phase | Electrical Group | Set within Group |
|---|---|---|---|
| 36 | U | 1 | 1 |
| 35 | V | 1 | 1 |
| 34 | W | 1 | 1 |
| 33 | U | 1 | 2 |
| 32 | V | 1 | 2 |
| 31 | W | 1 | 2 |
| 30 | U | 2 | 1 |
| 29 | V | 2 | 1 |
| 28 | W | 2 | 1 |
| 27 | U | 2 | 2 |
| 26 | V | 2 | 2 |
| 25 | W | 2 | 2 |

This pattern is repeated all of the way around the stator.

Since each of the first and second controllers are different, the first group of stator bars and second group of stator bars are electrically isolated from each other. As such, should one controller fail, the remaining controller may continue to provide power to the remaining group of stator bars in order to continue to drive the rotor magnetically coupled to the stator.

This arrangement may offer an improved NHV (Noise, Vibration and Harshness) performance over the first implementation (where the first half of stator bars allocated to the first group and second half of the stator bars is allocated to the second group), since the magnetic imbalance of the rotor and stator pairing is minimised when driven by only one of the two controllers.

In a fourth implementation, instead of allocating the stator bars between two groups of stator bars driven by first and second controllers via the respective firs and second inputs, the fourth implementation uses a third controller along with the first and second controllers to drive a third group of stator bars. The third group of stator bars is electrically isolated from the first and second groups of stator bars, and the third group of stator bars are coupled to a third input for receiving a third multi-phase input voltage from the third controller.

As with the second implementation described above, a repeating pattern of UVW phase arrangements may be allocated in the fourth implementation. As above, stator bar 36 may be allocated the U phase, stator bar 35 may be allocated the V phase, and stator bar 34 may be allocated the W phase, with the UVW pattern repeating all of the way around the stator until stator bar 1 is arrived at. As such, the repeated pattern would be UVW UVW UVW UVW etc all of the way around the stator. As above, each UVW block may be considered a "set" of stator bars.

Within this fourth implementation, the fundamental arrangement may be for each set of UVW stator bars to be alternately allocated to the first, second and third group of stator bars. That is, each set of UVW stator bars are alternately connected to the first input coupled to the first controller, the next set of UVW stator bars are connected to the second input coupled to the second controller and the third set of UVW stator bars are connected to the third input coupled to the third controller.

Using the arrangement of Figure 5 (for at least the first quadrant of the stator clockwise starting from stator bar 36), the stator bars may be arranged as follows:

| Stator Bar | Phase | Electrical Group |
|---|---|---|
| 36 | U | 1 |
| 35 | V | 1 |
| 34 | W | 1 |
| 33 | U | 2 |
| 32 | V | 2 |
| 31 | W | 2 |
| 30 | U | 3 |
| 29 | V | 3 |
| 28 | W | 3 |

This pattern is repeated all of the way around the stator.

Since each of the first, second and third controllers are different, the first, second and third groups of stator bars are electrically isolated from each other. As such, should one or two of the three controllers fail, the remaining controller(s) may continue to provide power to the remaining group of stator bars in order to continue to drive the rotor magnetically coupled to the stator.

This arrangement may offer an improved NHV (Noise, Vibration and Harshness) performance over the first implementation (where the first half of stator bars allocated to the first group and second half of the stator bars is allocated to the second group), since the magnetic imbalance of the rotor and stator pairing is minimised when driven by only one or two of the three controllers.

In a fifth implementation, the arrangement of stator bars and the associated phases differs to the arrangements discussed above. In this fifth implementation, each stator bar is arranged in a UU VV WW repeating pattern around the stator. That is, the first stator bar is part of a first set of the first group, the second stator bar is part of a first set of a second group and so on.

Using the labelling as above (and with reference to Figure 5), the arrangement may be, for example, as follows (for the first third of the stator):

| Stator Bar | Phase | Electrical Group |
|---|---|---|
| 36 | U | 1 |
| 35 | U | 2 |
| 34 | V | 1 |
| 33 | V | 2 |
| 32 | W | 1 |
| 31 | W | 2 |
| 30 | U | 1 |
| 29 | U | 2 |
| 28 | V | 1 |
| 27 | V | 2 |
| 26 | W | 1 |
| 25 | W | 2 |

This pattern is repeated all of the way around the stator.

Since each of the first and second controllers are different, the first group of stator bars and second group of stator bars are electrically isolated from each other. As such, should one controller fail, the remaining controller may continue to provide power to the remaining group of stator bars in order to continue to drive the rotor magnetically coupled to the stator.

This arrangement may offer an improved NHV (Noise, Vibration and Harshness) performance over the first implementation (where the first half of stator bars allocated to the first group and second half of the stator bars is allocated to the second group), since the magnetic imbalance of the rotor and stator pairing is minimised when driven by only one of the two controllers. In this implementation, every other stator bar is driven by one or the other of the controllers.

### Cooling Isolation

In its broadest implementation, the cooling isolation technique utilises two or more independent chambers that are flooded with cooling fluid to cool the stator bars in each of the respective chambers. It is noted that the stator may be provided with the cooling isolation arrangement only, or the cooling arrangement may be used in conjunction with the electrical isolation techniques described above.

With regards to the cooling isolation, by using separate chambers to cool the physically isolated groups of stator bars within the stator, redundancy is possible as if one cooling circuit fails, the remaining cooling chambers may continue to cool the respective stator bars. In such a scenario, the controllers driving the stator bars may be configured drive only the stator bars that are being cooled. In this scenario, whilst the machine will not able to provide the output power as before, this arrangement can at least implement a machine that can provide a limp-home mode, or sufficient output torque to complete the machine's task until it can be stopped safely.

In brief, the cooling chambers may be provided by using two or more dividers arranged in the housing to form the two or more chambers within the housing. The dividers form a fluid-tight seal between the two or more chambers. In this arrangement, the first group of stator bars is located in the first chamber of the housing and the second group of stator bars is located in the second chamber of the housing.

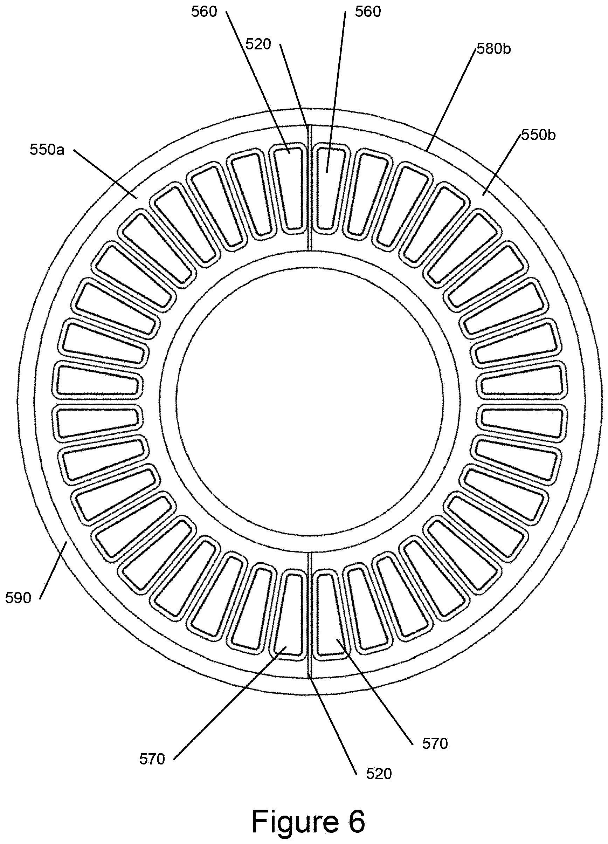

Turning to Figure 6, which shows a plan view of an axial flux stator that utilising the cooling isolation arrangement, there is shown a motor stator containing two groups of stator bars within one stator housing. Each group is separated from the other by walls or dividers 520, which both delineates the two groups of stator bars, and provides a physical and liquid tight separation between the groups of stator bars, effectively dividing the stator housing into two chambers 550a, b. Each group of stator bars may be driven by a single controller, or, as with the electrical isolation techniques discussed above, each group may be driven by separate controllers. Under normal operation both groups are combined to operate as a single unit providing rotating magnetic poles that interact with rotor permanent magnets disposed on a rotor that causes them and the rotor to which they are attached to rotate.

As with Figure 5, whilst 36 stator bars are shown in Figure 6, these techniques are also valid for other arrangements of axial flux machine stators. That is, fewer than 36 stator bars may be present, or more than 36 stator bars may be present, depending on the structure of an axial flux machine that could utilise such a stator. As described above, each stator bar has a single phase multi-turn coil wound round to provide a stator coil stack that is electrically connected to a controller (not shown) via respective inputs.

Each group of stator bars has its own coolant pump and flow from respective coolant inlets and outlets enabling an independent cooling circuit that offers redundancy should one lane need to be shut down, and isolation from the fault condition that caused that lane to be shut down.

As can be seen in Figure 6, separation walls or dividers 520 not only divide the stator into two chambers, but also act as physical barriers and liquid seals between adjacent coils 560 and 570 in each half.

Such a physical barrier between coils is beneficial should burnout failure be experienced by one coil and the failure mode generates excessive heat in a neighbouring armature which also fails. With such a failure, walls 520 can prevent propagation of burnout failure from one independent stator to the other and in such an event one stator half may be shut down or downgraded in its operation whilst the unaffected stator half continues to operate independently.

For each stator half or chamber 550a,b to operate independently of the other, each group of stator bars contains its own cooling inlet (not shown) and outlet (not shown) ports and a port for mounting a sensor(s) to monitor stator coil temperature (not shown).

In stark contrast to normal electrical engineering rules, which seeks symmetry and force balance in electric machines, and as a consequence invokes duplicate redundant machines in-case of an active machine failure, the present invention includes a dual wound stator in a single stack, which under normal operation acts as a single high power dense unit of short axial length.

Under the exceptional circumstance of a fault condition in one of the stators, the formerly single electrical machine, figuratively splits into its component parts, enabling isolation of the faulty stator half, with the remaining working stator, taking a 'limp-home' role. Separate coolant flow, temperature monitoring and power supply for each stator half provides aerospace level fail-safe and redundant fail-safe operation for each stator.

For a stator of the present invention there is a common stator housing 590 separated into two segments / halves or chambers 550a,b. Each segment contains a respective group of stator bars. There are sealed, liquid tight, separating walls or dividers 520 between the segments.

At a system level there is an independent cooling circuit for each group and due to the sealed separating walls 520, should there be a leak or loss of coolant in one circuit it will not affect the other circuit and the machine can continue to operate. Similarly, if one group of stator bars has an electrical or thermal fault, that lane can be shut down without effecting the performance of the other lane.

Whilst we have discussed the stator being arranged into two separate chambers, each chamber covering respective halves of the stator, other arrangements or numbers of chambers may be possible. For example, the stator housing may be split into more chambers by the use of more dividers. The stator could be arranged into 3, 4, 6, 8 or more chambers. In such an arrangement, each chamber is provided with its own inlet and outlet, and each chamber is isolated from other chambers.

Each of the multiple chambers may be fed individually with cooling fluid, or they may be supplied cooling fluid in groups. Similar to the electrical isolation arrangements, for example, they may be two groups or more, but each group has one or more sets of stator bars arranged around the stator.

Using as an example the arrangement of the second implementation of the electrical isolation, each of the sets may be allocated one or other of a respective group of stator bars, where each set is located in its own chamber. These chambers may be individually supplied with cooling fluid. Alternatively, multiple sets of stator bars may be grouped together into two or more groups. In the example of the second implementation of the electrical isolation, these group allocations may alternate around the stator, so the first set of stator bars is allocated the first group of stator bars, the next set of stator bars is allocated the second group of stator bars and so on and so forth around the stator.

Whilst the sets of stator bars are isolated from neighbouring sets of stator bars (via the grouping), the cooling may be provided to multiple sets at the same time: all of the group 1 sets of stator bars may be supplied with cooling fluid from a first supply, and all of the group 2 sets of stator bars may be supplied with cooling fluid from a second supply.

Similar to the other implementations of the electrical isolation, the groupings of stator bars may also, or instead, be cooled as first, second, or, in some implementations, a third coolant supply.

In all of the above cooling implementations we have discussed the use of dividers within a single housing that provide the cooling isolation. However, the cooling isolation may instead be provided by different means.

In an alternative implementation of the cooling arrangements, the isolation may instead be provided by the stator housing comprising separate chambers, where the separate chambers are provided by two or more separate and independent housing portions.

Each housing portion forms the respective chamber and encloses a respective group of stator bars. The independent housings may be provided to abut one another in the form of the stator housing 590 shown in Figure 6. By providing the separate housing portions, the chambers are thus isolated from each other.

Axial flux machines of the present invention provide high reliability and fault tolerance by virtue of fusing two stators together in a single housing unit, wherein each armature may additionally be protected from its neighbour by separation walls which limit heat transfer between armatures and in a fault condition prevents damage from propagating between armatures. Either remaining working stator segment being capable of 'limp-home' function.

Throughout the description, we have been referencing an axial flux machine. In practice, this may be used as a motor or generator.

No doubt many other effective alternatives will occur to the skilled person. It will be understood that the invention is not limited to the described embodiments and encompasses modifications apparent to those skilled in the art lying within the scope of the claims appended hereto.

## Claims

1. A stator for an axial flux machine, comprising:
a plurality of stator bars disposed circumferentially at intervals around an axis, each of the stator bars having a set of windings wound therearound to form a stator coil stack for generating a magnetic field generally parallel to the axis, the plurality of stator coil stacks being arranged to provide a hollow region at the centre of the axis; and
a housing for enclosing the plurality of stator bars,
wherein the plurality of stator bars are arranged into at least a first group of stator bars and a second group of stator bars, the first and second groups of stator bars being isolated from one another.

2. A stator according to claim 1, wherein the at least first and second groups of stator bars isolated from one another are groups of stator bars that are electrically isolated from each other, and wherein the first electrically isolated group of stator bars is coupled to a first input for receiving a first multi-phase input voltage, and the second electrically isolated group of stator bars is coupled to a second input for receiving a second multi-phase input voltage, the first and second inputs being coupleable to respective first and second controllers for providing the respective first and second multi-phase input voltages, the first and second controllers being different controllers.

3. A stator according to claim 2, wherein the first group of stator bars comprises a first plurality of stator bars located in a first circumferential half of the stator, and the second group of stator bars comprise a second plurality of stator bars located in a second circumferential half of the stator.

4. A stator according to claim 2, wherein the first group of stator bars comprises a first set of stator bars, and the second group of stator bars comprises a first set of stator bars, wherein the first set of stator bars of the first group comprises at least one respective stator bar for each of the first multi-phase input voltages, and wherein the first set of stator bars of the second group comprises at least one respective stator bar for each of the second multi-phase input voltages.

5. A stator according to claim 4, wherein the first group of stator bars comprises a second set of stator bars, and the second group comprises a second set of stator bars, wherein the second set of stator bars of the first group comprises at least one respective stator bar for each of the first multi-phase input voltages, and wherein the second set of stator bars of the second group comprises at least one respective stator bar for each of the second multi-phase input voltages, and/or
wherein the first group of stator bars and second group of stator bars are alternately arranged circumferentially around the stator.

6. A stator according to claim 4, wherein the first set of stator bars of the first group and the first set of stator bars of the second group are interleaved with each other circumferentially around the stator, optionally
wherein the interleaved arrangement comprises a first stator bar of the first set of stator bars of the first group being adjacent a first stator bar of the first set of stator bars of the second group, a second stator bar of the first set of stator bars of the first group being between the first stator bar of the first set of stator bars of the second group and a second stator bar of the first set of stator bars of the second group, a third stator bar of the first set of stator bars of the first group being between the second stator bar of the first set of stator bars of the second group and a third stator bar of the first set of stator bars of the second group, optionally
wherein the respective first, second and third stator bars correspond with respective first, second and third phase input voltages from the respective first or second multi-phase input voltages.

7. A stator according to claim 2, comprising a third group of stator bars that is electrically isolated from the first and second groups of stator bars, the third group of stator bars being coupled to a third input for receiving a third multi-phase input voltage, and wherein the third input is coupleable to a third controller for providing the respective third multi-phase input voltages, the third controller being different to the first and second controllers, optionally
wherein the first group of stator bars comprises a first set of stator bars, the second group of stator bars comprises a first set of stator bars, and the third group of stator bars comprises a first set of stator bars, wherein the first set of stator bars of the first group comprises at least one respective stator bar for each of the first multi-phase input voltages, wherein the first set of stator bars of the second group comprises at least one respective stator bar for each of the second multi-phase input voltages and wherein the first set of stator bars of the third group comprises at least one respective stator bar for each of the third multi-phase input voltages, optionally
wherein the first group of stator bars, second group of stator bars and third group of stator bars are alternately arranged circumferentially around the stator.

8. A stator according to any preceding claim, wherein:
the housing comprises two or more dividers arranged in the housing to form two or more chambers within the housing, the dividers forming a fluid-tight seal between the two or more chambers;
the at least two groups of stator bars are at least two physically isolated groups isolated from each other by the dividers; and
the first group of stator bars is located in the first chamber of the housing and the second group of stator bars is located in the second chamber of the housing.

9. A stator according to any one of claims 1 to 7, wherein:
the housing is formed of two or more separate housing portions, each housing portion forming a respective chamber and enclosing a respective group of stator bars, the two or more housing portions being isolated from each other;
wherein the first group of stator bars is located in the first housing portion and the second group of stator bars is located in the second housing portion.

10. A stator according to claim 8 or 9, wherein each of the two or more chambers is flooded with a cooling fluid, optionally
wherein each of the two or more chambers comprises an inlet port for supplying the cooling fluid, and an outlet port for drainage of the cooling fluid, and wherein the cooling fluid flows between the inlet and outlet ports, optionally
wherein the housing and stator coil stacks are arranged to permit the cooling fluid to flow back and forth between the inner and outer radius of the stator coil stacks.

11. A stator according to claim 1, wherein:
the housing comprises two or more dividers arranged in the housing to form two or more chambers within the housing, the dividers forming a fluid-tight seal between the two or more chambers;
wherein the first and second groups of stator bars are physically isolated groups of stator bars isolated from each other by the dividers; and
the first group of stator bars is located in the first chamber of the housing and the second group of stator bars is located in the second chamber of the housing.

12. A stator according to claim 1, wherein:
the housing is formed of two or more separate housing portions, each housing portion forming a respective chamber and enclosing a respective group of stator bars, the two or more housing portions being isolated from each other;
wherein the first group of stator bars is located in the first housing portion and the second group of stator bars is located in the second housing portion.

13. A stator according to claim 17 or 18, wherein each of the two or more chambers is flooded with a cooling fluid, optionally
wherein each of the two or more chambers comprises an inlet port for supplying the cooling fluid, and an outlet port for drainage of the cooling fluid, and wherein the cooling fluid flows between the inlet and outlet ports, optionally
wherein the housing and stator coil stacks are arranged to permit the cooling fluid to flow back and forth between the inner and outer radius of the stator coil stacks.

14. The stator according to claim 13, wherein the stator comprises one or more blocks disposed in the stator housing between the stator housing and one or more respective stator coil stacks, wherein the cooling fluid is forced through gaps between the stator coil stacks by means of the blocks.

15. An axial flux machine, comprising:
a stator according to any preceding claim;
a rotor comprising a set of permanent magnets and mounted for rotation about the axis of the machine, the rotor being spaced apart from the stator along the axis of the machine to define a gap between the stator and rotor, optionally
the axial flux machine comprises a second rotor comprising a set of permanent magnets and mounted for rotation about the axis of the machine, the second rotor being spaced apart from the stator along the axis of the machine to define a gap between the stator and second rotor, and the second rotor being disposed on a side of the stator opposed to the rotor, and/or
wherein the machine is a motor or a generator.
